# EUROPEAN PATENT APPLICATION

(11) **EP 1 770 118 A1**
(43) Date of publication of application: **04.04.2007**
(21) Application number: 06255025.6
(22) Date of filing: 28.09.2006
(51) Int. Cl.: C08J 9/12, C08J 9/00, C08G 18/09, C08G 18/42

(54) **Polyisocyanurate foam and foam board using the same**

(30) Priority: 30.09.2005 JP 2005288490
(71) Applicant: Asahi Fiber Glass Company, Limited, Tokyo 101-0045 (JP)
(72) Inventor: Matsuo, Atsushi, c/o Asahi Fiber Glass Co., Ltd., Tokyo 101-0045 (JP)
(74) Representative: Beacham, Annabel Rose

(57) **Abstract**

There are provided: a polyisocyanurate foam which has excellent strength, flame retardancy, dimension stability, and adhesiveness to a facing, which is easily formed from raw materials and has low environmental load; and a foam board. To obtain the polyisocyanurate foam, an isocyanate component comprising an aromatic polyisocyanate compound (A), water (B), and a polyol component comprising polyol (C) containing polyester polyols (C-3) consisting of apolyesterpolyol (C-1) having a hydroxyl value of 70 to 150 mg KOH/g and a polyester polyol (C-2) having a hydroxyl value of 200 to 300 mg KOH/g, are reacted with each other at an isocyanate index of 200 to 300, where 3 to 8 parts by mass of the water (B) is reacted with 100 parts by mass of the polyol (C). To obtain the foam board, a facing having an aluminum layer is stuck onto the foam.

## Description

### BACKGROUND OF THE INVENTION

### 1. Field of the Invention

The present invention relates to: a polyisocyanurate foam having excellent heat-insulating properties and dimension stability; and to a foam board using the same.

### 2. Description of the Related Art

Among various kinds of urethane foams, polyisocyanurate foam is excellent in heat-insulating properties and flame retardancy as well as having a high strength. Therefore, polyisocyanurate foam has been suitably used for various heat insulating materials, building panels, and the like. Conventionally, chlorofluorocarbon (i.e., Freon) such as trichlorofluoromethane has been employed as a foaming agent because, with this foaming agent, a foam having excellent flame retardancy and heat-insulating properties can be obtained.

However, Freon is a material causing environmental disruption that involves disruption of the ozone layer in the stratosphere and global warming, so the restricted use of Freon has been demanded. Therefore, studies have been made on Freons for next-generation such as HFC-365mfc and HFC-245fa, which have small ozone destruction coefficients and hardly cause environmental disruption, as well as urethane foams such as polyisocyanurate foams using hydrocarbons as foaming agents, such as cyclopentane, isopentane, and n-pentane.

Currently, the hydrocarbon-based foaming agents are widely used because they provide foams having excellent heat-insulating properties with small environmental loads. However, the hydrocarbon-based foams have problems such as those associated with volatile organic compounds (VOCs) and difficulties in handling because of their being flammable substances. For solving such problems, attention is presently being paid to a foam that incorporates bubbles formed by carbon dioxide gas generated by reaction between water and isocyanate, where the foam utilizes the so-called water-foaming.

JP 2003-48943 A discloses a foam that utilizes water-foaming. For example, a rigid polyurethane foam can be obtained by reacting: a polyol component including polyols containing an aromatic polyfunctional polyol compound and a polyether polyol having a hydroxyl value of 200 to 500 mg KOH/g where the content of the aromatic polyfunctional polyol compound is 40 to 85% by mass, water, an organic acid metal salt catalyst for isocyanuration, and an imidazole-based catalyst; with an isocyanate component.

The foam described in JP 2003-48943 A, which utilizes the water-foaming, is insufficient in flame retardancy, dimension stability, and the like. In addition, attempting to improve the flame retardancy of the foam causes a problem in that the foam cladded with a facing has a poor adhesion between the foam and the facing. Furthermore, to use such a foam as a foam board having a fire-proof/heat-insulating performance at levels for practical applications, it is necessary to clad a comparatively thick steel plate as a facing on the foam. Therefore, the foam has poor handling properties when used as a foam board.

### SUMMARY OF THE INVENTION

Therefore, in consideration of the above-mentioned problems, an obj ect of the present invention is to provide: a polyisocyanuratefoam withlessenvironmentalload which is excellent in strength as well as flame retardancy, dimension stability, and adhesiveness to a facing; and a foam board using the same.

To achieve the above-mentioned object, the present invention provides a polyisocyanurate foam comprising the reaction product of: an isocyanate component comprising an aromatic polyisocyanate compound (A); water (B); and a polyol component comprising polyol (C), characterized in that: the polyol (C) comprises polyols including a polyester polyol (C-1) having a hydroxyl value of 70 to 150 mg KOH/g and a polyester polyol (C-2) having a hydroxyl value of 200 to 300 mg KOH/g, said polyol (C) containing 75 to 100% by mass of polyester polyols (C-3) consisting of said polyester polyol (C-1) and said polyester polyol (C-2); the polyol (C) has an average hydroxyl value of 140 to 220 mg KOH/g; and the reaction product is obtained after reacting the isocyanate component, the water (B), and the polyol component at an isocyanate index of 200 to 300 wherein 3 to 8 parts by mass of the water (B) is reacted with 100 parts by mass of the polyol (C).

The polyisocyanurate foam of the present invention does not use a foaming agent such as Freon or hydrocarbon, so that raw materials of the polyisocyanurate foam can be easily handled and that the polyisocyanurate foam can be provided with an extremely reduced environmental load.

In addition, since the reaction product is obtained after reacting at an isocyanate index of 200 to 300 of: the isocyanate component, the water (B), and the polyol component using as the polyol (C) polyols containing polyester polyol and having an average hydroxyl value of 140 to 220 mg KOH/g in which 3 to 8 parts by mass of the water (B) is reacted with 100 parts by mass of the polyol (C),the polyisocyanuratefoam exhibitsexcellentstrength, flame retardancy, and adhesiveness to a facing. Furthermore, polyester polyol (C-1) having a hydroxyl value of 70 to 150 mg KOH/g and polyester polyol (C-2) having a hydroxyl value of 200 to 300 mg KOH/g are used in combination as the polyester polyol. The polyester polyol (C-1) having a hydroxyl value of 70 to 150 mg KOH/g improves the adhesiveness of the polyisocyanurate foam to the facing, while the polyester polyol (C-2) having a hydroxyl value of 200 to 300 mg KOH/g improves the strength and the dimension stability of the polyisocyanurate foam, so that the polyisocyanurate foam can be suitably used as a foam or the like for a foam board having excellent fire-proof properties.

In the polyisocyanurate foam of the present invention, the mass ratio of the polyester polyol (C-1) having a hydroxyl value of 70 to 150 mg KOH/g to the polyester polyol (C-2) having a hydroxyl value of 200 to 300 mg KOH/g in the polyester polyols (C-3) is preferably 0.3:1 to 3:1. As such, there can be obtained a polyisocyanurate foam with excellent adhesiveness to the facing.

Furthermore, it is preferable that the polyol (C) further comprises polyether polyol (C-4) having a hydroxyl value of 250 to 400 mg KOH/g, said polyol (C) containing 5 to 25% by mass of the polyether polyol (C-4). As such, the polyisocyanurate foam can be prevented from shrinking. Besides, handling properties in production of the polyisocyanurate foam can be improved because the polyisocyanurate foam hardens quickly.

Furthermore, it is preferable that the polyisocyanurate foam further comprises 0.2 to 3% by mass of phosphoric ester-based flame retardant (D). This polyisocyanurate foam has extremely high flame retardancy, and even a foam board using this polyisocyanurate foam with a comparatively thin layer of facing has excellent fire-proof/heat-insulating performances.

In another aspect, the present invention also provides a foam board comprising: the above-mentioned polyisocyanurate foam; and a facing stuck on at least one surface of the polyisocyanurate foam, said facing comprising: one or more aluminum layers with a total thickness of 3 to 40 µm; and a resin layer formed on the surface thereof which is in contact with the polyisocyanurate foam. The aforementioned polyisocyanurate foam shows good adhesiveness to the facing. In addition, the foam board thus obtained has excellent fire-proof properties, so that it can be used as an incombustible material defined according to ISO 5660 Cone Calorimeter test.

By sticking a facing on the polyisocyanurate foam, the polyisocyanurate foam can be used for a foam board having high fire-proof/heat-insulting properties and also having excellent handling properties and workability.

### DETAILED DESCRIPTION OF THE PREFERRED EMBODIMENTS

In the present invention, a polyisocyanurate foam is obtained after reacting an isocyanate component composed of an aromatic polyisocyanate compound (A), water (B), and a polyol component containing polyol (C). Hereinafter, each of the components of the polyisocyanurate foam of the present invention will be described in detail.

The aromatic polyisocyanate compound (A) to be used as the isocyanate component is not particularly limited as far as the compound is generally used for urethane-based resin foams. Specific examples of the aromatic polyisocyanate compound (A) include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate. Of those, polymethylene polyphenyl polyisocyanate (i.e. crude MDI) is preferable. In addition, the aromatic polyisocyanate compound may be used alone. Alternatively, two or more of the aromatic polyisocyanate compounds may be used as a mixture. Furthermore, for example, an isocyanate group-terminal prepolymer obtainable by reacting the above-mentioned isocyanate compound with an aliphatic isocyanate or alicyclic isocyanate, or an isocyanurate compound having an isocyanate group obtainable by making an isocyanate compound into a trimeric form may be mixed to be used.

For preparing the polyisocyanurate foam of the present invention, water (B) is used. The water (B) may be added when the isocyanate component is mixed with the polyol component, or maybe included in the polyol component that is described later.

The polyol component of the polyisocyanurate foam of the present invention contains at least the polyol (C).

The polyol (C) to be used as the polyol component is required to have an average hydroxyl value of 140 to 220 mg KOH/g, preferably 150 to 210 mg KOH/g. When the average hydroxyl value of the polyol (C) is in the above-mentioned range, there is no possibility of impairing its miscibility with the isocyanate component. Therefore, the polyisocyanurate foam can be produced with high productivity. In addition, the resultant polyisocyanurate foammayhave excellent flame retardancy, dimension stability, and adhesiveness to a facing.

In the present invention, furthermore, the polyol (C) used contains polyester polyols (C-3) consisting of polyester polyol (C-1) having a hydroxyl value of 70 to 150 mg KOH/g and polyester polyol (C-2) having a hydroxyl value of 200 to 300 mg KOH/g.

It is known that polyisocyanurate foams can be made using polyester polyol as the polyol component to be reacted with the isocyanate component, whereby a polyisocyanurate foam having comparatively excellent flame retardancy can be obtained, but the known polyisocyanurate foams tend to show less adhesiveness to a facing. In the present invention, however, the polyester polyol (C-1) having a hydroxyl value of 70 to 150 mg KOH/g improves the adhesiveness to the facing. In addition, the polyester polyol (C-2) having a hydroxyl value of 200 to 300 mg KOH/g improves the strength and the dimension stability.

Therefore, there can be provided a polyisocyanurate foam with excellent flame retardancy, strength, dimension stability, and adhesiveness to the facing.

Furthermore, the hydroxyl value of the polyester polyol (C-1) is preferably 90 to 130 mgKOH/g. Inaddition, the hydroxyl value of polyester polyol (C-2) is preferably 220 to 280 mg KOH/g.

Furthermore, in the polyester polyols (C-3), the mass ratio of the polyester polyol (C-1) to the polyester polyol (C-2) is preferably 0.3:1 to 3:1, more preferably 0.4:1 to 2 . 5: 1 . When both the polyester (C-1) and the polyester polyol (C-2) are within the above-mentioned mass ratio, there can be provided a polyisocyanurate foam with excellent flame retardancy, strength, dimension stability, and adhesiveness to the facing.

Furthermore, the amount of the polyester polyols (C-3) contained in the polyol (C) must be 75 to 100% by mass, preferably 80 to 100% by mass. If the amount is less than 75% by mass, the resultant polyisocyanurate foam tends to have poor strength, dimension stability, and adhesiveness to the face substance.

The types of polyol to be used as the polyester polyol (C-1) as well as the polyester polyol (C-2) are not particularly limited as far as each of them has the above-mentioned hydroxyl values. Aromatic polyester polyol having two or more hydroxyl groups on its terminals or side chains, which can be obtained by condensing polyfunctional polyol having two or more functional groups with polybasic acid, is preferable.

Examples of the polyfunctional polyol include 1) bifunctional polyols such as: ethylene glycol, diethylene glycol, triethylene glycol, propylene glycol, dipropylene glycol, butanediol, pentanediol, neopentyl glycol, hexanediol, cyclohexanedimethanol, bisphenol A, bisphenol F, bisphenol S, and the like; compounds obtainable by way of addition polymerization of those polyols with one or more alkylene oxides such as ethylene oxide or propylene oxide; or polyethylene glycol, polypropylene glycol, and the like, 2) trifunctional polyols such as: trimethylolpropane, glycerin, and the like; or compounds obtainable by way of addition polymerization of those polyols with one or more alkylene oxides, and 3) polyfunctional polyols such as: pentaerythritol, dipentaerythritol, sorbitol, saccharides, and the like; or compounds obtainable by way of addition polymerization of those polyols with one or more alkylene oxides.

Examples of the polybasic acid include orthophthalic acid, isophthalic acid, telephthalic acid, hexahydrophthalic acid, tetrahydrophthalic acid, trimellitic acid, and pyromellitic acid.

From the viewpoint of flame retardancy, polyester polyol, which can be obtained by condensing phthalic acid with at least one selected from the group of bifunctional, trifunctional, or polyfunctional alcohols and alkylene oxide-adducts thereof, is preferable. Polyester polyol, which can be obtained by condensing terephthalic acid with diethylene glycol, is particularly preferable.

The number of hydroxyl groups contained in the polyester polyol is preferably two to three. If the number of hydroxyl groups is two or more, the resultant polyisocyanurate foam may have good dimension stability.

If the number of hydroxyl groups is more than four, the adhesiveness to the facing may be impaired. Thus, three or less is preferable.

In the present invention, in the polyol (C) the polyester polyol (C-4) may be used in addition to the above-mentioned polyether polyols (C-3).

The use of polyether polyol (C-4) prevents the polyisocyanurate foam from shrinking. Besides, handling properties in production of the polyisocyanurate foam can be improved because the polyisocyanurate foam hardens quickly.

The polyether polyol (C-4) preferably has a hydroxyl value of 250 to 400 mg KOH/g. If the hydroxyl value of the polyether polyol (C-4) is less than 250 mg KOH/g, the above-mentioned effects cannot be exerted sufficiently and the resultant polyisocyanurate foam tends to have poor strength and flame retardancy. If the hydroxyl value of the polyether polyol (C-4) exceeds 400 mg KOH/g, the resultant polyisocyanurate foam tends to be rigid, therefore the adhesiveness to a facing tends to be impaired.

Furthermore, the amount of polyether polyol (C-4) contained in the polyol (C) is preferably 5 to 25% by mass, more preferably 5 to 20% by mass. If the amount of polyether polyol (C-4) contained in the polyol (C) is less than 5% by mass, the above-mentioned effects are barely noticeable. If the amount of polyether polyol (C-4) contained in the polyol (C) exceeds 25% by mass, the polyisocyanurate foam tends to have decreased flame retardancy.

The type of polyol which is to be used in the above-mentioned polyether polyol (C-4) is not particularly limited as long as each of them has the above-mentioned hydroxyl value. Examples of the polyol include compounds prepared by way of addition polymerization of polyol having three or more functional groups, such as trimethylpropane, glycerin, pentaerythritol, dipentaerythritol, sorbitol, and sucrose with one or more alkylene oxides. Among them, a compound prepared by way of addition polymerization of the product obtained after adding glycerin to sucrose with one or more alkylene oxides, is preferable.

The polyisocyanurate foam of the present invention preferably further includes a catalyst. The catalyst may be added when the polyol component, water (B), and the isocyanate compound are mixed together, or may be previously added to the polyol component.

As the catalyst, a trimerization catalyst is preferable and may be used in combination with a catalyst for foaming, a catalyst for resin forming, or the like to control a reaction rate, formability, or heat-insulating properties.

Examples of the trimerization catalyst include 1) metal oxides such as lithium oxide, sodium oxide, and potassium oxide, 2) alkoxides such as sodium methoxide, sodium ethoxide, sodium propoxide, sodium butoxide, potassium methoxide, potassium ethoxide, potassium propoxide, and potassium butoxide, 3) organometallic salts such as potassium acetate, potassium octylate, and ferric oxalate, 4) tertiary amines such as 2, 4, 6-tris(dimethylaminomethyl)phenol, N,N',N''-tris(dimethylaminopropyl)hexahydrotriazine, and triethylenediamine, 5) derivatives of ethyleneimine, and 6) chelates such as acetylacetone with alkali metals, aluminum, andtransitionmetals, quaternaryammoniumsalts, and the like. One kind of those may be used alone, or two or more kinds of those maybe used in combination. Of those, the organometallic salts or quaternary ammonium salts may be used more preferably.

Further, for the catalyst for foaming, a catalyst which is highly effective for promoting a reaction between water and an isocyanate group may preferably be used. Specific examples of the catalyst for foaming preferably include N,N,N',N',N"-pentamethyldiethylenetriamine, bis(2-dimethylaminoethyl)ether, N,N,N'-trimethylaminoethylethanolamine, N,N',N''-tris-(3-dimethylaminopropyl)hexahydro-s-triazine, and N,N-dimethylcyclohexylamine.

Furthermore, compounds having a morpholine ring in their molecule, such as N-methylmorpholine, N-ethylmorpholine, 4,4'-oxydimethylene dimorpholine, and N,N-dimethylaminoethyl morpholine (hereinafter referred to as "morpholine-based compounds") can be preferably employed because those compounds can modify the surface characteristics of foam to be obtained and improve the adhesiveness to a facing. The morpholine compound preferably has a boiling point of 200°C or less.

The amount of the catalyst to be employed can be arbitrarily controlled depending on the conditions such as a production rate and is preferably 1 to 5% by mass with respect to the total amount of the polyisocyanurate foam.

Furthermore, the polyisocyanurate foam of the present invention preferably further includes a flame retardant (D). The flame retardant (D) may be added when the polyol component, the water (B), and the isocyanate component are mixed together, or may be previously added to the polyol component.

Examples of the flame retardant (D) include: phosphoric-based compoundssuch asammonium polyphosphate, melamine phosphate, and triphenylphosphine; melamine-based compounds such as melamine cyanulate and melamine; metal hydrates such as aluminum hydroxide and magnesium hydroxide; and phosphoric ester-based compounds such as trimethylphosphate, triethylphosphate, triphenylphosphate, tricresylphosphate, trixylenylphosphate, cresyl-diphenyl-phosphate, cresyl-di-2,6-xylenyl-phosphate, tris(dichloropropyl)phosphate, tris-(chloropropyl)phosphate, and tris(tribromoneopentyl)-phosphate. Of those, the phosphoric ester-based compounds are preferable, and tris(chloropropyl)-phosphate, triethylphosphate, and tricresylphosphate are particularly preferable.

Inaddition, the polyisocyanurate foam of the present invention may further include any of various additives, such as a foam stabilizer, a viscosity-decreasing agent, an agent for improving the adhesiveness to facing, and a cell size-reducing agent. These additives may be added when the polyol component, water (B), and the isocyanate component are mixed together, or may be previously added to the polyol mixture.

The foam stabilizers to be used include, but are not particularly limited to, conventionally known nonionic surfactants and silicon surfactants. In addition, from the viewpoint of heat-insulating properties, the bubble diameter of the foam is preferably small. Thus, a foam stabilizer, having a high performance for nucleating bubbles with tendency of forming comparatively small diameters of bubbles, is preferable. As such the foam stabilizer, for example, "SF2937F" or "SF2938" available from Dow Corning Toray Silicone Co., Ltd., can preferably be used.

The viscosity-decreasing agents to be used include those conventionally known in the art, such as glycol ethers or compounds obtainable by way of addition polymerization thereof with one or more alkylene oxides, low-molecular weight alcohols, and phosphoric esters with low viscosities. In addition, the agents for improving the adhesiveness to a facing include those conventionally known in the art, such as glycol ethers or compounds obtained by the addition polymerization thereof with one or more alkylene oxides, low-molecular weight alcohols, and phosphoric esters with low viscosities. Furthermore, the cell size-reducing agent includes those conventionally known in the art, such as polysiloxane polyalkyl- and perfluoro-compounds each having a small degree of condensation.

To make the polyisocyanurate foam of the present invention, an isocyanate component composed of an aromatic polyisocyanate compound (A), water (B), and a polyol component containing at least polyol (C) are subjected to collisional mixing by using, for example, a general-purpose high-pressure foaming machine to make a mixture solution, and then the mixture solution is placed in a die having predetermined dimensions, or the like to foam and harden the mixture solution.

In this reaction, it is necessary to mix with the isocyanate component, the water (B), and the polyol component to provide an isocyanate index of 200 to 300. A preferable isocyanate index is 220 to 300. If the isocyanate index is less than 200, the amount of isocyanurate ring produced decreases, the resultant polyisocyanurate foam thereby tending to have insufficient strength and poor flame retardancy. When the isocyanate index exceeds 300, the foam becomes too rigid, thereby resulting in impaired adhesiveness to a facing and in poor formability because of insufficient hardness, tendency of causing voids, wrinkles, and the like. As a result, the resultant foam cannot be easily used for a foam board or the like.

Furthermore, it is necessary to mix with the isocyanate compound, the water (B), and the polyol component such that the content of the water (B) is 3 to 8 parts by mass with respect to 100 parts by mass of the polyol (C). The content of water (B) is preferably 4 to 7 parts by mass. If the content of water (B) is less than 3 parts by mass, the resultant foam may have high density and thus become heavy, and the adhesiveness thereof to a facing may be impaired. If the content of water (B) exceeds 8 parts by weight, the polyisocyanurate foam may have comparatively lower density. Therefore, the resultant foam tends to have strength and dimension stability decreased.

The temperature of a molding container such as a die is preferably 40 to 90°C, more preferably 50 to 80°C. If the temperature at foaming and hardening is less than 40°C, the hardenability of the above-mentioned mixture becomes poor and needs an extended production time. If the temperature exceeds 90°C, the surface of the resultant foam becomes coarse and the appearance thereof becomes inferior, and in addition, adhesiveness to a facing may be impaired.

Furthermore, the mixing ratio of the isocyanate component to the water (B) and the polyol component is preferably 150 to 400 parts by mass, more preferably 200 to 350 parts by mass with respect to 100 parts by mass of the total of the water (B) and the polyol component. Within the above-mentioned mixing ratio, the viscosity of the mixture is not too excessive, so that the isocyanate component shows good miscibility with the water (B) and the polyol component.

The polyisocyanurate foam thus obtainedhas a density of 25 to 60 kg/m³, a thermal conductivity of 22 to 36 mW/mK, a percentage of closed cells of 80% or more, and high heat-insulating properties. In addition, the polyisocyanurate foam is excellent in dimension stability because of no shrinkage of the foam over time. Furthermore, the polyisocyanurate foam is also excellent in formability because it generates extremely few voids, wrinkles, or the like.

Next, the foam board of the present invention will be described.

The foam board of the present invention is one prepared by sticking a facing on at least one surface of the peripheral surfaces of the polyisocyanurate foam of the present invention.

In other words, the foam board of the present invention can be obtained by, for example, discharging and applying an foaming liquid prepared as a mixture of the above-mentioned isocyanate compound and the polyol component onto a facing (a bottom facing, to be specific), the facing being continuously supplied by using a continuous laminator; and, simultaneously, placing a facing (a top facing, to be specific) on the foaming liquid to sandwich the foaming liquid between the top and bottom facings, followed by a process which involves foaming and hardening or the like.

The facing to be used for the foam board of the present invention is one having a resin layer made of a polyethylene resin, an acrylic resin, an epoxy resin, or the like on a surface that is in contact with the polyisocyanurate foam, and at least one aluminum layer thereon. Inaddition, in the facing, a fiber layer such as kraft paper, nonwoven fabric, cloth may be placed between the resin layer and the aluminum layer.

In consideration of the adhesiveness to the polyisocyanurate foam, or the like, the resin layer is preferably a resin layer of polyethylene.

Inaddition, the aluminum layer preferably has a total thickness of 3 to 40 µm, more preferably 9 to 40 µm. If the total thickness is 3 µm or more, the resultant foam board can be provided with improved heat-insulating properties. Besides, if the aluminum layer has a total thickness of 9 µm or more, a combinationbetween the aluminum layer and the foam of the present invention can be used as a flame retardant material defined according to ISO 5660. Here, the thickness of the aluminum layer is preferably not more than 40 µm because a thickness of more than 40 µm may only lead to increased cost and weight, and provide little effect. The foam board onto which the above-mentioned facing is stuck is excellent in flame retardancy and heat-insulating properties. Besides, it can be used as an incombustible material, as defined according to ISO 5660 Cone Calorimeter test.

### Examples

Hereinafter, the present invention will be described in more detail with reference to examples.

### Production of foam board

Raw materials were mixed at the ratio listed in Table 1 and 2, respectively, and stirred at 5, 000 rpm for 5 seconds by using a laboratory mixer. Subsequently, the resultant mixture solution was injected into a mold heated at 65ºC. The mold used was made of aluminum having internal dimensions of 500 mm x 500 mm x 48 mm with opened side portions, in which facings formed with a coating film of polyethylene resin were placed on the upper and bottom surfaces. After 6 minutes, the resultant form board was removed from the mold. Consequently, the formed board of each of Examples 1 to 9 and Comparative Examples 1 to 7 was obtained.

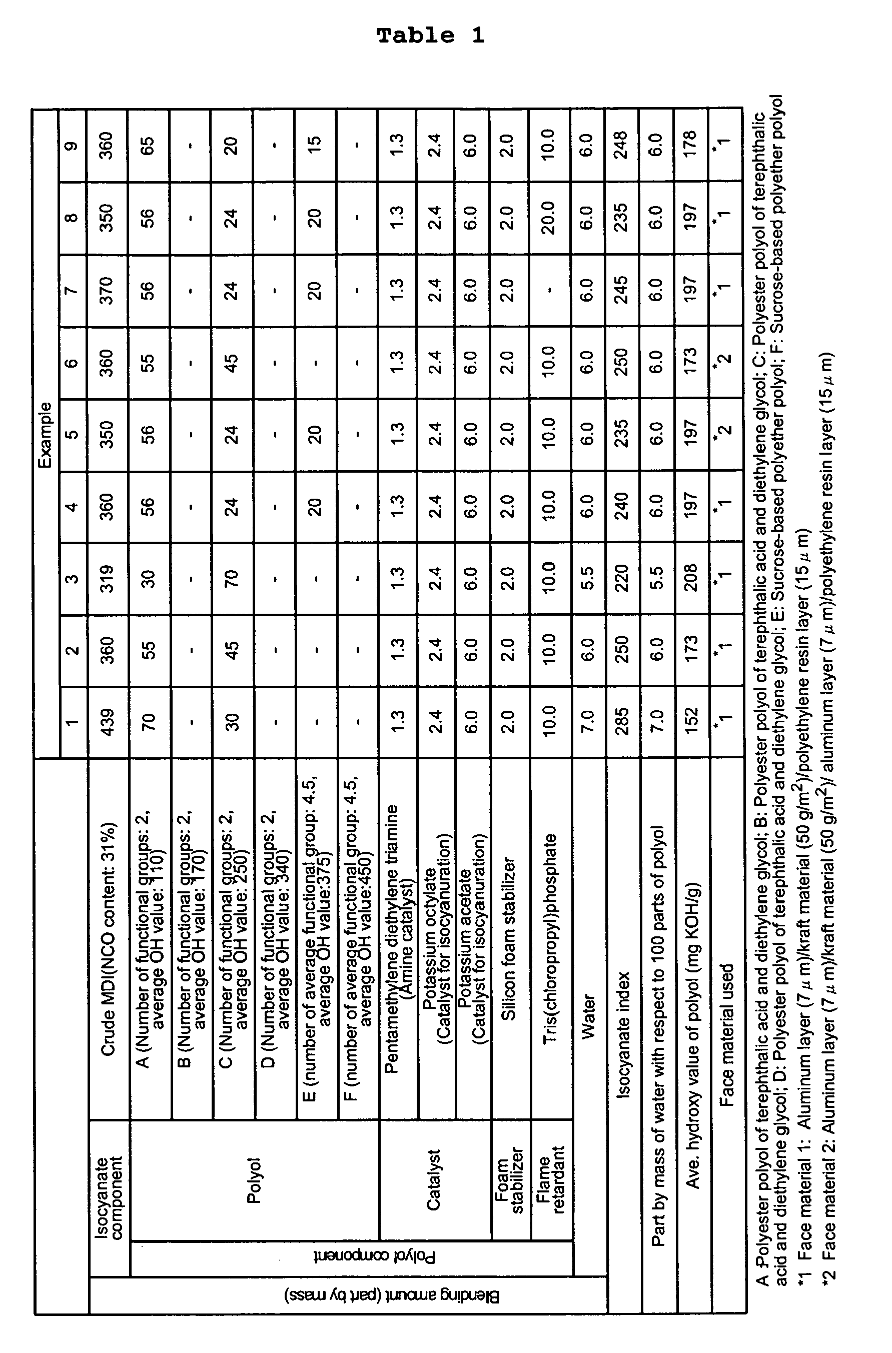

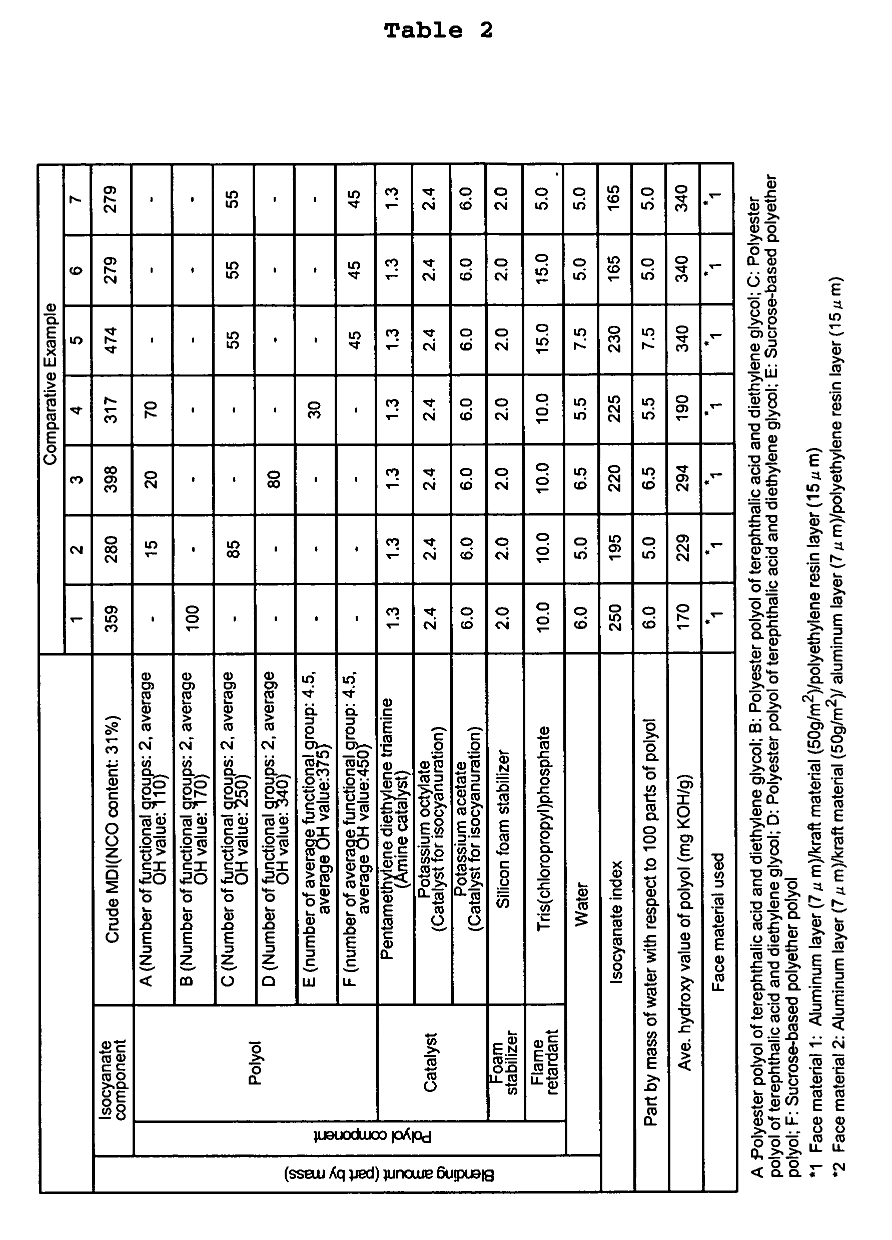

### Evaluation items

### A. Deterioration amount of thermal conductivity

The foam board obtained as described above was provided as a test sample and then aged at room temperature for one day. Subsequently, a 200 mm x 200 mm section was cut out of the sample while the facingwas left. The section was subjected to a measurement of thermal conductivity (initial value of the thermal conductivity) at an average temperature of 20°C by the procedure according to JIS A 1412. After that, the test sample was aged for one month under the conditions of 25°C and 50% humidity. Subsequently, the thermal conductivity (the thermal conductivity after one month) of the test sample was measured in the same way as described above and a difference between the thermal conductivity (initial value of the thermal conductivity) and the thermal conductivity (the thermal conductivity after one month) was determined.

### B. Dimension stability

The rate of dimensional change of the foam in the thickness direction was measured under heat and humidity conditions (i.e., temperature: 60°C, humidity: 95%) by the procedure according to JIS A 9511. The results were scored as "Excellent" when the rate of dimensional change was less than 1%; "Favorable " when the rate was 1 to 2%; "Marginal" when the rate was 2 to 3%; and "Poor" when the rate was 3% or more.

### C. Adhesiveness to facing

A notch of 100 mm x 100 mm square was notched in the facing of the resultant test sample. One side of the facing was delaminated by 5 mm from the foam. Then, a clip was attached on the delaminated portion. Subsequently, the clip was pulled in the directionperpendicular to the facing to peel off the facing from the foam, and the maximum load required for the peeling at the time was measured. The results were scored as "Excellent" when the maximum load was 2.0 kgf or more; "Favorable" when the maximum load was 1.5 to 2.0 kgf; "Marginal" when the maximum load was 1.0 to 1.5 kgf; and "Poor" when the maximum load was less than 1.0 kgf.

### D. External appearance

Each of the resultant test samples was left to stand for one day and the surface appearance of the foam was then observed. That is, the number and sizes of voids, the presence or absence of wrinkles generated, the degree of unevenness, and the like were observed by visual observation.

### E. Examination of fire-proof properties

Each of the resultant test samples was left to stand for one day and a 100 mm x 100 mm section was cut out of the sample while leaving the facings. Subsequently, the 100 mm x 100 mm section was subjected to the procedure according to ISO 5660 Cone Calorimeter test to determine a gross calorific value. The results were scored as "Excellent" when the gross calorific value was less than 3 MJ/m²; "Favorable" when the gross calorific value was 3 to 9 MJ/ m²; "Marginal" when the gross calorific value was 10 to 14 MJ/ m²; and "Poor" when the gross calorific value was 15 MJ/ m² or more.

### F. Incombustibility test

The test sample was subjected to an incombustibility test by the procedure according to ISO 5660 Cone Calorimeter test and then evaluated as acceptable when the sample was able to satisfy the following standards (1) to (3):
(1) During the time period of 20 minutes from the initiation of heating, the gross calorific value is 8 MJ/m² or less.
(2) During the time period of 20 minutes from the initiation of heating, there are no cracking or holes that penetrate from the top to the backside of the sample, which are adverse in fire prevention.
(3) During the time period of 20 minutes from the initiation of heating, maximum calorific rate does not exceed 200 kW/m² for 10 seconds or longer.

The above-mentioned test was conducted on each of Examples 1 to 9 and Comparative Examples 1 to 7. The results are summarized in Table 3.

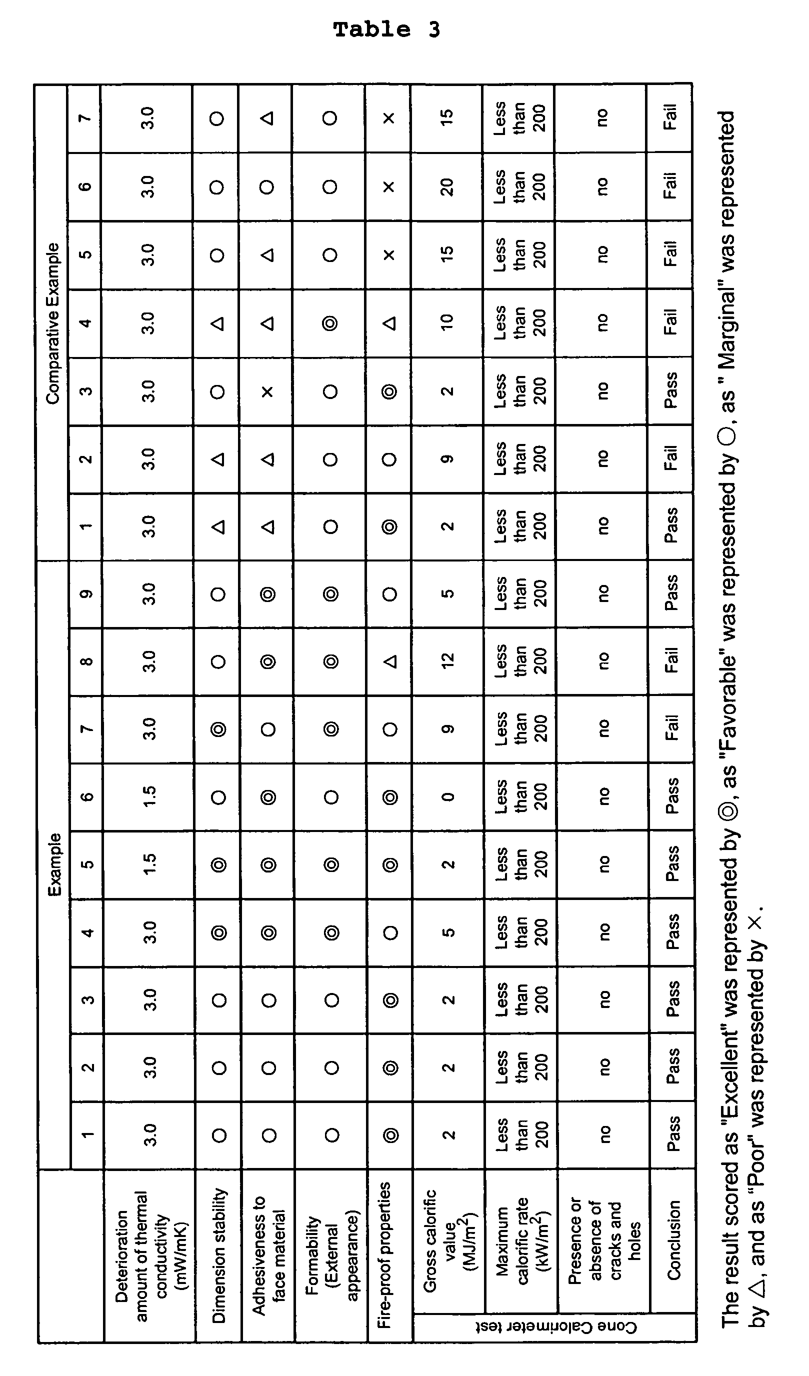

From the above-mentioned results, the foam of each of ComparativeExamples 1, 3-5, and7, in which the polyester polyol (C-1) having a hydroxyl value of 70 to 150 mg KOH/g and the polyester polyol (C-2) having a hydroxyl value of 200 to 300 mg KOH/g were not used in combination as the polyol (C), and the foam of Comparative Example 2, in which the average hydroxyl value of polyol (C) exceeded 220 mg KOH/g, showed poor adhesiveness to the facing. In the foam of Comparative Example 6, improved adhesiveness to a facing was seen even though the above-mentioned combination of polyester polyols was not employed, because polyether polyol was used in combination. It is noted, however, that the foam of Comparative Example 6 was hardly suitable for use as a foam board because the foam showed poor fire-proof properties and flame retardancy.

Furthermore, in the foam of each of Comparative Examples 2, 6, and 7, the isocyanate index thereof was lower than 200. Thus, the foams were hardly suitable for use as a foam board because the foam showed poor fire-proof properties and flame retardancy.

On the other hand, the foam of each of Examples 1 to 9 was prepared by using as polyol, polyol having an average hydroxyl value of 140 to 220 mg KOH/g, which contained polyester polyol having a hydroxyl value of 70 to 150 mg KOH/g and polyester polyol having a hydroxyl value of 200 to 300 mg KOH/g, and obtained after reacting the isocyanate component with the polyol component at an isocyanate index of 200 to 300. Therefore, the foam of each of Examples 1 to 9 was excellent in adhesiveness to a facing, flame retardancy, as well as fire-proof properties. In particular, the foam board using the foam of each of Examples 1 to 6, and 9, which contained 0.2 to 3% by mass of phosphoric ester-based flame retardant (D) was extremely excellent in flame retardancy and fire-proof properties. Therefore, each of these foam boards constituted an incombustible material defined according to ISO 5660 Cone Calorimeter test.

The polyisocyanurate foam of the present invention can be used as a heat insulating materials with a small environmental load and suitably used for building materials such as a panel for a house.

## Claims

1. A polyisocyanurate foam comprising the reaction product of : an isocyanate component comprising an aromatic polyisocyanate compound (A); water (B); and a polyol component comprising polyol (C), **characterized in that**:
the polyol (C) comprises polyols including a polyester polyol (C-1) having a hydroxyl value of 70 to 150 mg KOH/g and a polyester polyol (C-2) having a hydroxyl value of 200 to 300 mg KOH/g, said polyol (C) containing 75 to 100% by mass of polyester polyols (C-3) consisting of said polyester polyol (C-1) and said polyester polyol (C-2);
the polyol (C) has an average hydroxyl value of 140 to 220 mg KOH/g; and
the reaction product is obtained after reacting the isocyanate component, the water (B), and the polyol component at an isocyanate index of 200 to 300 wherein 3 to 8 parts by mass of the water (B) is reacted with 100 parts by mass of the polyol (C).

2. The polyisocyanurate foam according to claim 1, wherein the mass ratio of the polyester polyol (C-1) having a hydroxyl value of 70 to 150 mg KOH/g to the polyester polyol (C-2) having a hydroxyl value of 200 to 300 mg KOH/g in the polyester polyols (C-3) is 0.3:1 to 3:1.

3. The polyisocyanurate foam according to claim 1 or 2, wherein the polyol (C) further comprises polyether polyol (C-4) having a hydroxyl value of 250 to 400 mg KOH/g, said polyol (C) containing 5 to 25% by mass of the polyether polyol (C-4).

4. The polyisocyanurate foam according to any one of claims 1 to 3, wherein said foam further comprises 0.2 to 3% by mass of phosphoric ester-based flame retardant (D).

5. A foam board comprising:
the polyisocyanurate foam according to any one of claims 1 to 4; and
a facing stuck on at least one surface of the polyisocyanurate foam, said facing comprising: one or more aluminum layers with a total thickness of 3 to 40 µm; and a resin layer formed on the surface thereof which is in contact with the polyisocyanurate foam.

6. The foam board according to claim 5, wherein said foam board is defined as an incombustible material according to ISO 5660 Cone Calorimeter test.

7. A process for preparing a polyisocyanurate foam comprising the reaction of: an isocyanate component comprising an aromatic polyisocyanate compound (A); water (B) ; and a polyol component comprising polyol (C), at an isocyanate index of 200 to 300 wherein 3 to 8 parts by mass of the water (B) is reacted with 100 parts by mass of the polyol (C), wherein:
the polyol (C) comprises polyols including a polyester polyol (C-1) having a hydroxyl value of 70 to 150 mg KOH/g and a polyester polyol (C-2) having a hydroxyl value of 200 to 300 mg KOH/g, said polyol (C) containing 75 to 100% by mass of polyester polyols (C-3) consisting of said polyester polyol (C-1) and said polyester polyol (C-2); and
the polyol (C) has an average hydroxyl value of 140 to 220 mg KOH/g.

8. The process according to claim 7 , wherein the mass ratio of the polyester polyol (C-1) having a hydroxyl value of 70 to 150 mg KOH/g to the polyester polyol (C-2) having a hydroxyl value of 200 to 300 mg KOH/g in the polyester polyols (C-3) is 0.3:1 to 3:1.

9. The process according to claim 7 or 8, wherein the polyol (C) further comprises polyether polyol (C-4) having a hydroxyl value of 250 to 400 mg KOH/g, said polyol (C) containing 5 to 25% by mass of the polyether polyol (C-4).

10. The process according to any one of claims 7 to 9, wherein further comprising the addition of 0.2 to 3% by mass of phosphoric ester-based flame retardant (D).
